# EUROPEAN PATENT APPLICATION

(11) **EP 4 756 269 A1**
(43) Date of publication of application: **10.06.2026**
(21) Application number: 24848548.4
(22) Date of filing: 01.02.2024
(51) Int. Cl.: F16K 17/22, B25J 15/06

(54) **VACUUM PAD AND PAD MEMBER**

(30) Priority: 31.07.2023 JP 2023124378
(71) Applicant: SMC Corporation, Tokyo 104-0031 (JP)
(72) Inventor: YASUNAGA, Masaya, Ibaraki 300-2493 (JP)
(74) Representative: Keil & Schaafhausen Patentanwälte PartGmbB
(86) International application number: PCT/JP2024/003327
(87) International publication number: WO 2025/027885

(57) **Abstract**

A vacuum pad (10A) uses a vacuum to clamp a workpiece (W), said vacuum pad comprising: a hollow pad body (16) that has a clamping surface (14) which contacts the workpiece; an annular attachment part (18) that is provided to the pad body and that is for attachment to a first support member (200); and a valve unit (50) that is provided to the inside of the attachment part and that adjusts the flow rate of air flowing through a suction flow path (52) which sucks air from an internal space of the pad body.

## Description

### TECHNICAL FIELD

The present invention relates to a vacuum pad and a pad member.

### BACKGROUND ART

For example, in WO 2015/141980 A1, there is disclosed a vacuum pad that uses a vacuum pressure to suction a workpiece.

### SUMMARY OF THE INVENTION

There is a long awaited need for a more satisfactory vacuum pad and a pad member.

The present invention has the object of solving the aforementioned problem.

One aspect of the present invention is characterized by a vacuum pad configured to use a vacuum to clamp a workpiece, the vacuum pad including a hollow pad main body including a suction surface configured to contact the workpiece, an annular shaped mounting member provided on the pad main body and configured to be installed on a support member, and a valve unit provided on an inner side of the mounting member and configured to adjust a flow rate of air that flows through a suction flow path through which air from an internal space of the pad main body is sucked in.

Another aspect of the present invention is characterized by a pad member configured to use a vacuum to clamp a workpiece, the pad member including a hollow pad main body including a suction surface configured to contact the workpiece, and an annular shaped mounting member provided on the pad main body, wherein the mounting member includes an annular shaped protruding part configured to protrude outwardly from the pad main body, on an outer circumferential surface of the protruding portion, an outer side installation groove that is capable of being installed on a first support member, and on an inner circumferential surface of the mounting member, an inner side installation groove is formed, and an adapter configured to install the mounting member on a second support member is capable of being installed into the inner side installation groove.

According to the present invention, a more satisfactory vacuum pad and a pad member are capable of being obtained.

### BRIEF DESCRIPTION OF DRAWINGS

[FIG. 1] FIG. 1 is a perspective view of a pad member according to one embodiment of the present invention;
[FIG. 2] FIG. 2 is a vertical cross-sectional view of the pad member;
[FIG. 3] FIG. 3 is a cross-sectional view taken along line III-III of FIG. 2;
[FIG. 4] FIG. 4 is a vertical cross-sectional view of a suction unit equipped with a vacuum pad according to a first embodiment;
[FIG. 5] FIG. 5 is a partially enlarged vertical cross-sectional view of the vacuum pad of FIG. 4;
[FIG. 6] FIG. 6 is an exploded perspective view of a valve unit;
[FIG. 7] FIG. 7 is an explanatory diagram of a method for mounting the vacuum pad;
[FIG. 8] FIG. 8 is a vertical perspective view of a suction unit equipped with a vacuum pad according to a second embodiment;
[FIG. 9] FIG. 9 is a vertical cross-sectional view of the vacuum pad of FIG. 8;
[FIG. 10] FIG. 10 is a vertical cross-sectional view of a vacuum pad according to a first exemplary modification; and
[FIG. 11] FIG. 11 is a vertical cross-sectional view of a vacuum pad according to a second exemplary modification.

### DETAILED DESCRIPTION OF THE INVENTION

A description will be given below with reference to the drawings concerning a vacuum pad and a pad member according to one embodiment of the present invention. At first, a description will be given concerning a pad member, which is a constituent component of the vacuum pad according to the present invention.

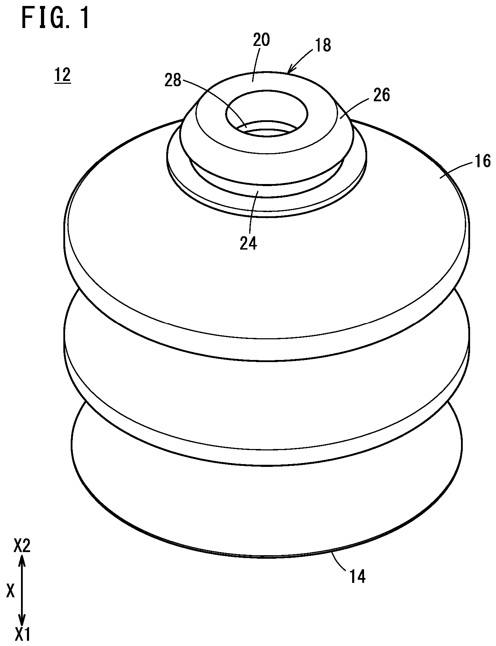

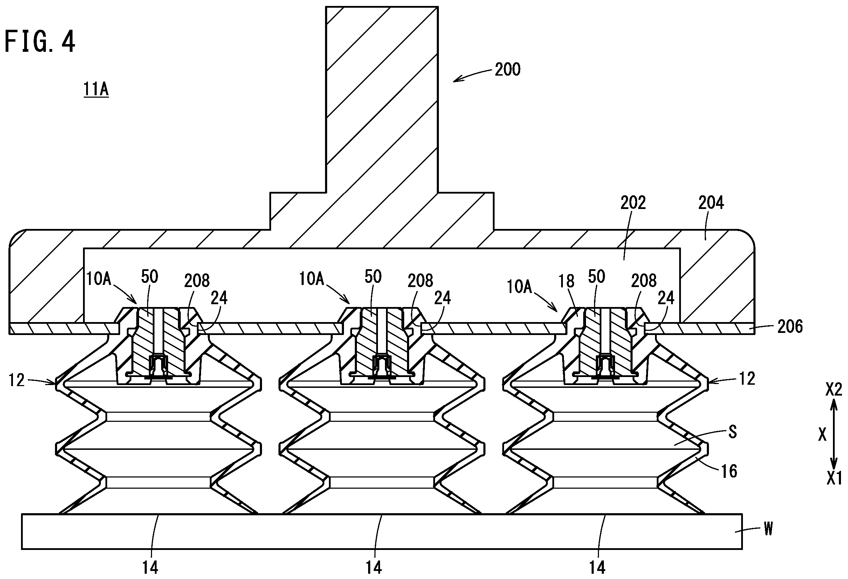

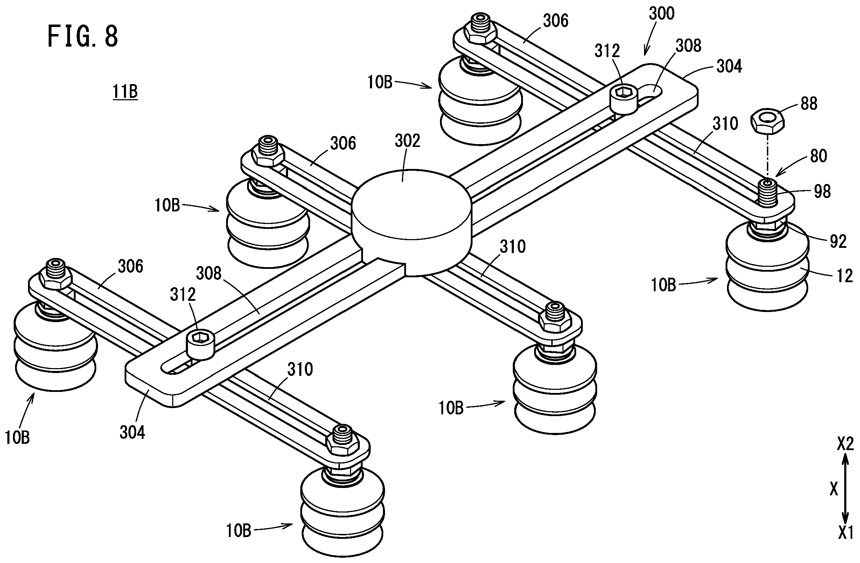

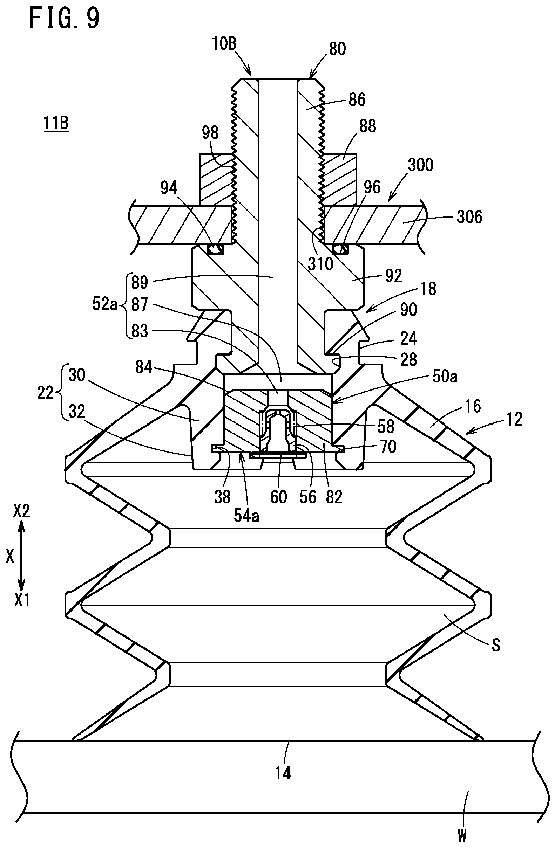

A pad member 12 shown in FIG. 1 to FIG. 3 is installed and used on a first support member 200 (refer to FIG. 4) or a second support member 300 (refer to FIG. 8 and FIG. 9) depending on the workpiece W and other factors. As shown in FIG. 4, the first support member 200 is a direct mounting type of support member on which the pad members 12 can be directly installed. As shown in FIG. 8 and FIG. 9, the second support member 300 is an adapter mounting type of support member on which the pad members 12 can be installed via an adapter 80.

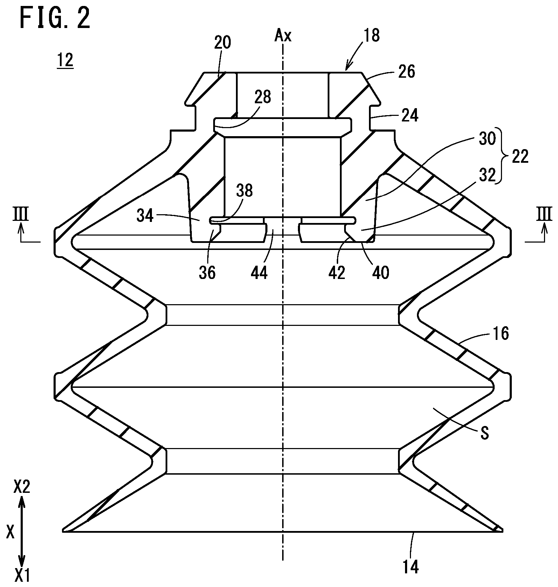

As shown in FIG. 1 and FIG. 2, the pad member 12 is a member that uses a vacuum and thereby suctions a workpiece W. The pad member 12 has a cylindrical shape. A suction surface 14 that contacts the workpiece W is disposed at one end in the axial direction (X direction) of the pad member 12. The pad member 12 is integrally formed by an elastic material. As the elastic material that forms the pad member 12, there may be cited synthetic rubber, natural rubber, and a thermoplastic elastomer or the like.

The pad member 12 includes a hollow pad main body 16 and a mounting member 18. The pad main body 16 is a cylindrical portion having an internal space S. The pad main body 16 has a bellows shape that is expandable and contractable along the axial direction of the pad member 12, and is capable of bending with respect to the axial direction of the pad member 12. The pad main body 16, for example, is a 2.5-stage bellows. Moreover, it should be noted that the number of stages of the pad main body 16 can be set as appropriate. One end (an end in the X1 direction) of the pad main body 16 becomes wider along the X1 direction. The pad main body 16 is not limited to having a bellows shape, and may be, for example, a nozzle shape having a constant outer diameter and inner diameter over the entire length thereof.

As shown in FIG. 1 to FIG. 3, the mounting member 18 is provided at another end (an end in the X2 direction) of the pad main body 16. The mounting member 18 is formed in an annular shape. The mounting member 18 has a protruding portion 20, and a stopper portion 22. As shown in FIG. 1 and FIG. 2, the protruding portion 20 is an annular portion that is projected out from the pad main body 16 in an opposite direction (the X2 direction) to the internal space S.

An outer side installation groove 24 that is capable of being installed on the first support member 200 is formed on an outer circumferential surface of the protruding portion 20. The outer side installation groove 24 is used in the case that the pad member 12 is installed on the first support member 200 (refer to FIG. 4) of a direct mounting type. The outer side installation groove 24 is not used in the case that the pad main body 16 is installed on the second support member 300 (refer to FIG. 8 and FIG. 9) of an adapter mounting type. The outer side installation groove 24 extends in an annular shape. On a portion located further in the X2 direction than the outer side installation groove 24 from within the outer circumferential surface of the protruding portion 20, a tapered surface 26 that decreases in diameter along the X2 direction is formed.

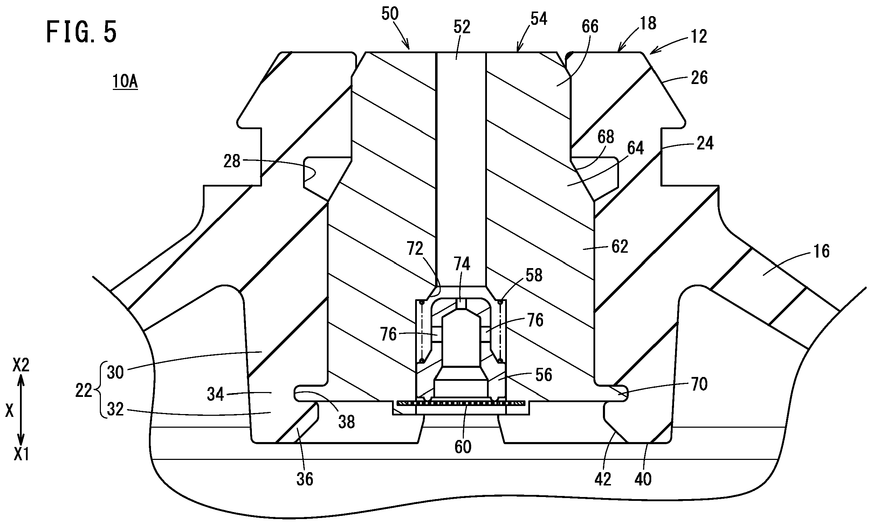

As shown in FIG. 2, an inner side installation groove 28 into which the adapter 80 is capable of being installed is formed on an inner circumferential surface of the protruding portion 20. The inner side installation groove 28 is used in the case that the pad member 12 is installed on the second support member 300 (refer to FIG. 8 and FIG. 9) of the adapter mounting type. The inner side installation groove 28 is not used in the case that the pad member 12 is installed on the first support member 200 (refer to FIG. 5) of the direct mounting type. The inner side installation groove 28 extends in an annular shape. In the axial direction of the pad member 12, the inner side installation groove 28 and the outer side installation groove 24 are mutually positioned at the same height. Moreover, it should be noted that, in the axial direction of the pad member 12, the inner side installation groove 28 and the outer side installation groove 24 may be positioned so as to be mutually offset from each other.

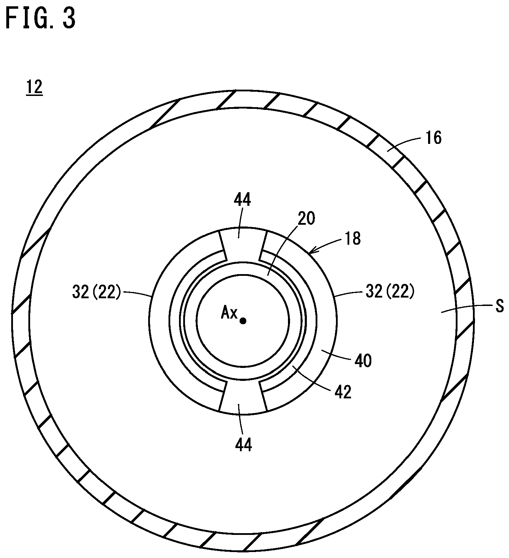

The stopper portion 22 is positioned in the internal space S of the pad main body 16. The stopper portion 22 restricts contraction in the X direction of the pad main body 16. As shown in FIG. 2 and FIG. 3, the stopper portion 22 includes an inwardly protruding portion 30, and a pair of locking pawls 32. The inwardly protruding portion 30 is an annular portion that is projected out from the pad main body 16 in the X1 direction. The inner diameter of the inwardly protruding portion 30 is larger than the inner diameter of the protruding portion 20 (refer to FIG. 2).

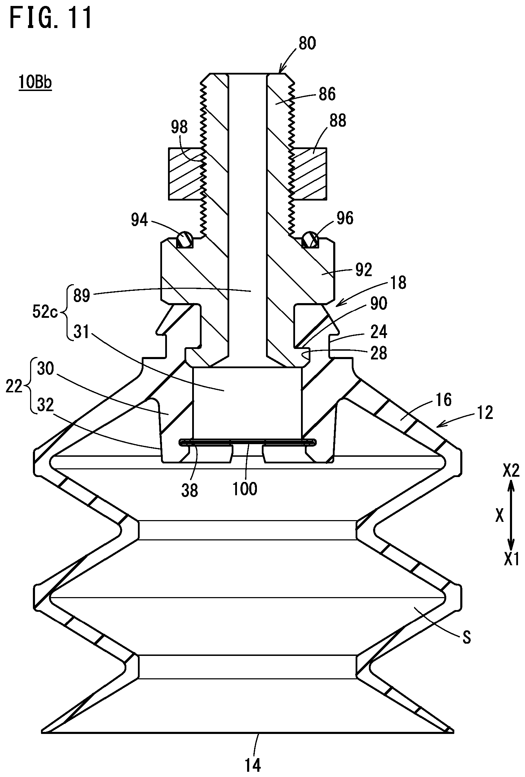

The locking pawls 32 are capable of supporting a later-described valve unit 50 (refer to FIG. 5, etc.). Further, the locking pawls 32 are capable of supporting a later-described filter 100 (refer to FIG. 11). Each of the locking pawls 32 includes a leg portion 34 and a pawl main body 36. The leg portion 34 projects out in the X1 direction from an end surface in the X1 direction of the inwardly protruding portion 30. The pawl main body 36 extends from an end part in the X1 direction of the leg portion 34 toward the axis Ax of the pad member 12. Between an end surface of the inwardly protruding portion 30 and the pawl main body 36, there is formed a groove portion 38 into which the valve unit 50 (refer to FIG. 5) or the filter 100 (refer to FIG. 11) is capable of being inserted.

As shown in FIG. 2, the pawl main body 36 includes a stopper surface 40, and an inclined surface 42. The stopper surface 40 is a flat surface that faces in the X1 direction. By the stopper surface 40 being placed in contact with the workpiece W, contracting of the pad main body 16 in the X direction is restricted. The inclined surface 42 is inclined in the X2 direction from the stopper surface 40 toward the axis Ax of the pad main body 16. A gap 44 is formed between the locking pawls 32 that are mutually adjacent to each other in the circumferential direction of the inwardly protruding portion 30 (refer to FIG. 2 and FIG. 3). The stopper portion 22 may include three or more of the locking pawls 32.

Such a pad member 12, as noted previously, is capable of being installed on both the first support member 200 of the direct mounting type, and the second support member 300 of the adapter mounting type. Therefore, the method of installing the pad member 12 can be flexibly changed depending on the workpiece W. Accordingly, in the present embodiment, a satisfactory pad member 12 is capable of being obtained.

### (First Embodiment)

Next, a description will be given concerning a suction unit 11A equipped with a vacuum pad 10A according to a first embodiment. As shown in FIG. 4, the suction unit 11A is equipped with a plurality of the vacuum pads 10A, and a first support member 200. The suction unit 11A suctions the workpiece W by using a vacuum pressure via the plurality of vacuum pads 10A.

In the vacuum pads 10A, the pad member 12 can be directly installed on the first support member 200. The first support member 200 includes a body 204 having a negative pressure chamber 202, and a plate 206. The air inside the negative pressure chamber 202 is sucked out by a non-illustrated vacuum generating device. The plate 206 is installed on the body 204 in a manner so as to cover the negative pressure chamber 202. The plate 206 includes a plurality of hole portions 208 that communicate with the negative pressure chamber 202. The pad member 12 is fixed to the plate 206 by inserting the protruding portion 20 of the pad member 12 into each of the hole portions 208.

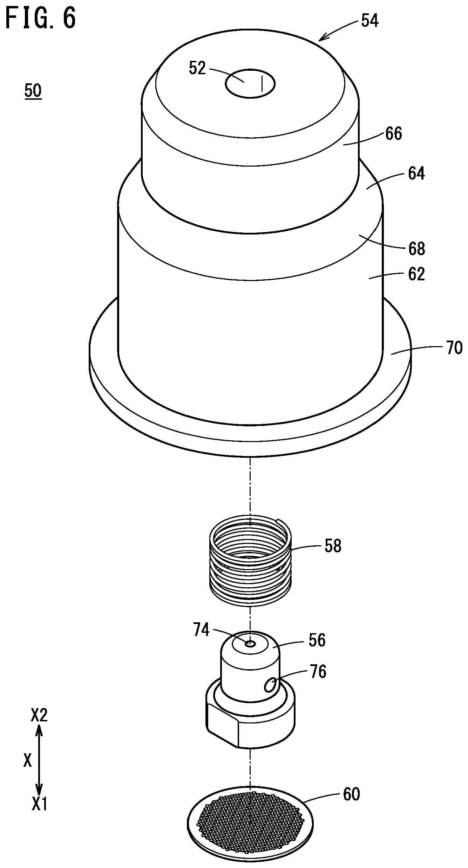

As shown in FIG. 4 to FIG. 6, each of the vacuum pads 10A is equipped with the pad member 12, and the valve unit 50. The valve unit 50 is capable of being attached to and detached from an inner side of the mounting member 18 of the pad member 12. As shown in FIG. 5 and FIG. 6, the valve unit 50 serves to adjust the flow rate of a suction flow path 52 through which the air from the internal space S of the pad main body 16 is sucked in. The valve unit 50 includes a valve housing 54, a valve element 56, a spring 58, and a filter 60.

The valve housing 54 may be made, for example, by a resin material or a metallic material. The resin material may be a soft resin material or may be a hard resin material. As examples of the soft resin material, there may be cited synthetic rubber, natural rubber, and a thermoplastic elastomer or the like.

The valve housing 54 is formed in a cylindrical shape, and includes the suction flow path 52 in the interior thereof. The valve housing 54 has a large diameter part 62, an intermediate part 64, and a small diameter part 66. The large diameter part 62 is disposed on an inner side of the inwardly protruding portion 30. The small diameter part 66 is disposed on an inner part of the protruding portion 20. The intermediate part 64 serves to connect the large diameter part 62 and the small diameter part 66. An intermediate surface 68 whose diameter decreases in a tapered shape from the large diameter part 62 toward the small diameter part 66 is disposed on the outer surface of the intermediate part 64. An annular shaped valve flange portion 70 is disposed on the large diameter part 62. By inserting the valve flange portion 70 into the groove portion 38 of the mounting member 18, the valve housing 54 is fixed to the inner side of the mounting member 18.

The valve element 56 is disposed in the suction flow path 52 of the valve housing 54. The valve element 56 is capable of being displaced in the axial direction with respect to the valve housing 54. The valve housing 54 is equipped with a seat portion 72 of a tapered shape against which a head part of the valve element 56 is capable of abutting. The spring 58 is disposed between the valve element 56 and the valve housing 54. The spring 58 biases the valve element 56 in a direction (the X1 direction) away from the seat portion 72. The filter 60 is fixed to an end part in the X1 direction of the large diameter part 62. The filter 60 restricts the displacement in the X1 direction of the valve element 56. The filter 60 suppresses a situation in which foreign matter enters into the suction flow path 52 of the valve housing 54 from the internal space S of the pad main body 16. The filter 60 is constituted in a mesh-like shape. The filter 60, for example, may be made by a metallic material.

In the head part of the valve element 56, an orifice 74 is formed in the center thereof. A plurality of opening parts 76 are formed in a side part of the valve element 56. An area of the opening parts 76 is significantly larger than the area of the orifice 74. In the case that the head part of the valve element 56 is separated from the seat portion 72 of the valve housing 54, the internal space S of the pad main body 16 communicates, via the orifice 74 of the valve element 56 and the plurality of opening parts 76, with the negative pressure chamber 202. In the case that the head part of the valve element 56 is abutted against the seat portion 72 of the valve housing 54, the internal space S of the pad main body 16 communicates, via the orifice 74 of the valve element 56, with the negative pressure chamber 202.

In a state in which the air of the internal space S is sucked in from the suction flow path 52, in the case that the internal space S of the pad main body 16 is not blocked by the workpiece W, the air that flows through the suction flow path 52 passes toward the X2 direction at a first flow velocity through the orifice 74 of the valve element 56. Therefore, the valve element 56 is displaced in the X2 direction due to a pressure difference that occurs before and after the orifice 74, and the head part of the valve element 56 abuts against the seat portion 72 of the valve housing 54. When the head part of the valve element 56 abuts against the seat portion 72, since the air no longer flows through the plurality of opening parts 76 of the valve element 56, the flow velocity of the air that passes through the orifice 74 becomes even greater than the first flow velocity. In accordance with this feature, the pressure difference that occurs before and after the orifice 74 becomes greater, and therefore, the head part of the valve element 56 reliably remains in a state of having abutted against the seat portion 72 of the valve housing 54. In this state, the flow rate of the air that flows through the suction flow path 52 is a first flow rate that is sufficiently small. Therefore, due to the internal space S that is not blocked by the workpiece W, it is possible to suppress a situation in which the pressure of the negative pressure chamber 202 rises.

In a state in which the air of the internal space S is sucked in from the suction flow path 52, in the case that the internal space S of the pad main body 16 is blocked by the workpiece W, the air that flows through the suction flow path 52 passes toward the X2 direction at a second flow velocity that is smaller than the first flow velocity through the orifice 74 of the valve element 56. Therefore, the pressure difference that occurs before and after the orifice 74 is smaller than the pressure difference in the case of the first flow velocity. In this case, the valve element 56 is displaced in the X1 direction by the biasing force of the spring 58, and the head part of the valve element 56 separates away from the seat portion 72 of the valve housing 54. When the head part of the valve element 56 separates away from the seat portion 72, since the air flows through the orifice 74 and the plurality of opening parts 76, the flow velocity of the air that passes through the orifice 74 becomes even smaller than the second flow velocity. In accordance with this feature, the pressure difference that occurs before and after the orifice 74 becomes smaller, and therefore, the head part of the valve element 56 reliably remains in a state of having separated away from the seat portion 72 of the valve housing 54. In this state, the flow rate of the air that flows through the suction flow path 52 is a second flow rate that is larger than the first flow rate. Therefore, the pressure in the internal space S of the pad main body 16 can be quickly reduced to a pressure equivalent to the pressure of the negative pressure chamber 202.

According to such a suction unit 11A, even in the case that the internal space S of one or some of the vacuum pads 10A is not blocked by the workpiece W and is opened to the atmosphere when the workpiece W is being sucked, a situation can be suppressed in which the suction force of the vacuum pad 10A whose internal space S is blocked by the workpiece W decreases.

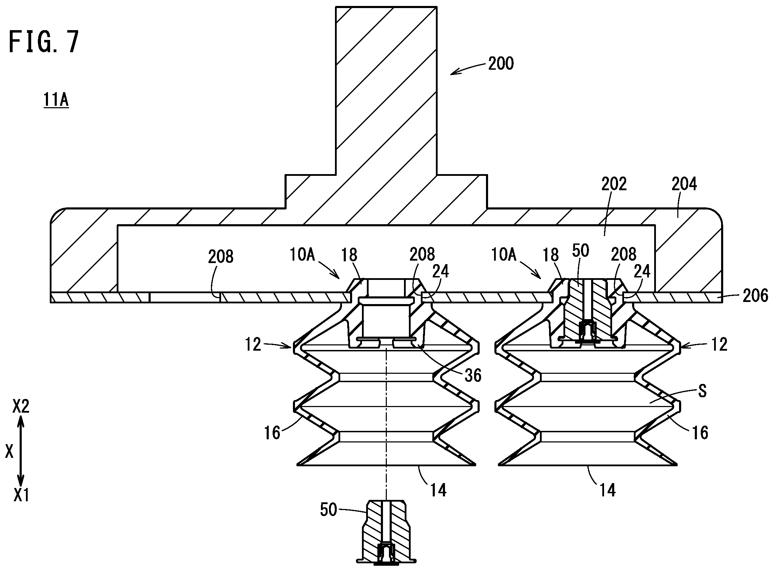

The vacuum pad 10A that is constituted in the manner described above, for example, is installed on the first support member 200 in the following manner. As shown in FIG. 7, the protruding portion 20 of the mounting member 18 of the pad member 12 is inserted into the hole portion 208 of the first support member 200. In accordance with this feature, an edge part surrounding the hole portions 208 is inserted into the outer side installation groove 24 of the protruding portion 20, and therefore, the pad member 12 is fixed to the plate 206. Moreover, in the present embodiment, since the tapered surface 26 is provided on the protruding portion 20, the protruding portion 20 can be smoothly inserted into the hole portions 208.

Thereafter, the valve unit 50 is inserted via the internal space S of the pad main body 16 into an inner side of the mounting member 18. Upon doing so, together with the small diameter part 66 of the valve housing 54 being inserted into the inner side of the protruding portion 20, the large diameter part 62 is inserted into the inner side of the inwardly protruding portion 30. Further, the valve flange portion 70 surmounts the inclined surface 42 of the locking pawls 32 and is disposed in the groove portion 38. In accordance with this feature, the valve unit 50 is fixed with respect to the pad member 12, and the installation of the vacuum pad 10A to the first support member 200 is completed.

In this state, the small diameter part 66 of the valve housing 54 restricts the elastic deformation toward the inner side of the protruding portion 20, and therefore, functions as a retainer that prevents the pad member 12 from slipping out from the hole portions 208. Therefore, for example, even in the case that a relatively heavy workpiece W is sucked and lifted upward, the pad member 12 can be prevented from falling off from the plate 206. In this manner, according to the present embodiment, the vacuum pad 10A can be easily installed on the first support member 200.

In the case that the vacuum pad 10A is taken out from the first support member 200, the valve unit 50 is taken out from the pad member 12. According to the present embodiment, since a tool such as pliers or the like can be inserted from the gap 44 between the mutually adjacent locking pawls 32 and thereby clamp the valve flange portion 70, it is possible to easily take out the valve unit 50 from the mounting member 18. In accordance with this feature, the function of the valve housing 54 to prevent the mounting member 18 from coming off with respect to the first support member 200 is released. Thereafter, by the pad member 12 being pulled out in the X1 direction, the vacuum pad 10A is taken out from the first support member 200.

In accordance with such a vacuum pad 10A, since the flow rate of the air that flows through the suction flow path 52 can be adjusted by the valve unit 50, in a state in which the internal space S of the pad main body 16 is not blocked by the workpiece W, more air than necessary can be prevented from being sucked in. Accordingly, a satisfactory vacuum pad 10A can be obtained.

### (Second Embodiment)

Next, a description will be given concerning a suction unit 11B equipped with a vacuum pad 10B according to a second embodiment. Moreover, in the present embodiment, the same constituent elements as those of the aforementioned vacuum pad 10A are denoted by the same reference numerals, and detailed description of such features will be omitted.

As shown in FIG. 8, the suction unit 11B is equipped with a plurality of the vacuum pads 10B, and the second support member 300. The suction unit 11B suctions the workpiece W by using a vacuum pressure via the plurality of vacuum pads 10B.

The vacuum pad 10B is capable of installing the pad member 12 to the second support member 300 via the adapter 80. The second support member 300 is equipped with a support shaft member 302, a pair of first arms 304, and three second arms 306. A distal end of a non-illustrated robot arm is installed on the support shaft member 302. The pair of first arms 304 extend mutually in opposite directions from the support shaft member 302. The first arms 304 are formed in a plate-like shape. First grooves 308 that extend along a longitudinal direction of the first arms 304 are formed in the first arms 304. The first grooves 308 penetrate in the thickness direction through the first arms 304.

The second arms 306 extend in a direction that intersects (for example, a direction that is perpendicular) with respect the direction in which the first arms 304 extend. The second arms 306 are formed in a plate-like shape. Second grooves 310 that extend along a longitudinal direction of the second arms 306 are formed in the second arms 306. The second grooves 310 penetrate in the thickness direction through the second arms 306.

One of the second arms 306 is fixed to the support shaft member 302. Two of the second arms 306 are connected respectively by fastening members 312 to the two first arms 304. The fastening members 312 are inserted through the first grooves 308 and the second grooves 310. Two of the vacuum pads 10B are attached to each of the second arms 306. The shape of the second support member 300 can be set as appropriate.

As shown in FIG. 9, each of the vacuum pads 10B is equipped with the pad member 12, a valve unit 50a, and the adapter 80. The valve unit 50a is capable of being attached to and detached from an inner side of the mounting member 18 of the pad member 12. The valve unit 50a serves to adjust the flow rate of a suction flow path 52a through which the air is sucked in from the internal space S of the pad main body 16. The valve unit 50a includes a valve housing 54a, the valve element 56, the spring 58, and the filter 60.

The valve housing 54a includes a housing main body 82, and the valve flange portion 70. The housing main body 82 is formed in the same manner as the large diameter part 62 of the aforementioned valve housing 54. The valve housing 54a does not include the intermediate part 64 and the small diameter part 66 of the aforementioned valve housing 54. A tapered surface 84 whose diameter decreases in the X2 direction is formed on an outer circumferential surface of the housing main body 82.

The adapter 80 is a member for the purpose of installing the pad member 12 on the second support member 300. The adapter 80 includes an adapter main body 86, and a mounting nut 88. The adapter main body 86 is formed in a cylindrical shape. A gap 87 is disposed between the adapter main body 86 and the valve housing 54a. An inner hole 89 of the adapter main body 86 communicates via the gap 87 with an inner hole 83 of the housing main body 82. The suction flow path 52a includes the inner hole 89 of the adapter main body 86, the gap 87, and the inner hole 83 of the housing main body 82. More specifically, the valve housing 54a includes at least a portion of the suction flow path 52a. An annular shaped adapter flange portion 90, which is capable of being installed in the inner side installation groove 28 of the pad member 12, is disposed at one end (the end in the X1 direction) of the adapter main body 86.

An annular shaped protruding part 92, which bulges outwardly in a diametrical direction, is disposed at an intermediate portion in the axial direction of the adapter 80. An arrangement groove 96 in which an annular shaped elastic member 94 is arranged is formed on a surface of the protruding part 92 that faces in the X2 direction. The elastic member 94, for example, is constituted by a rubber material. From within the outer circumferential surface of the adapter main body 86, a male threaded portion 98 onto which the mounting nut 88 is threaded is formed on a portion located further in the X2 direction than the protruding part 92.

The vacuum pad 10B that is constituted in the manner described above is installed on the second support member 300 in the following manner. As shown in FIG. 9, the valve unit 50a and the adapter main body 86 are assembled on the pad member 12. Thereafter, as shown in FIG. 8, in a state in which the adapter main body 86 is inserted into the second groove 310 of the second arm 306, the mounting nut 88 is tightened onto the male threaded portion 98 of the adapter main body 86. Upon doing so, since the second arm 306 is sandwiched between the mounting nut 88 and the protruding part 92, the adapter 80 is fixed to the second arm 306. According to the present embodiment, the elastic member 94 is pressed against the protruding part 92 by the second arm 306, and therefore, a situation can be suppressed in which the adapter 80 shifts in position with respect to the second arm 306.

The vacuum pad 10B is not necessarily limited to the above-described configuration. Hereinafter, a description will be given concerning exemplary modifications of the vacuum pad 10B that is capable of being installed to the adapter mounting type of second support member 300. Moreover, in the exemplary modifications, the same constituent elements as those of the aforementioned vacuum pad 10B are denoted by the same reference numerals, and detailed description of such features will be omitted.

### (First Exemplary Modification)

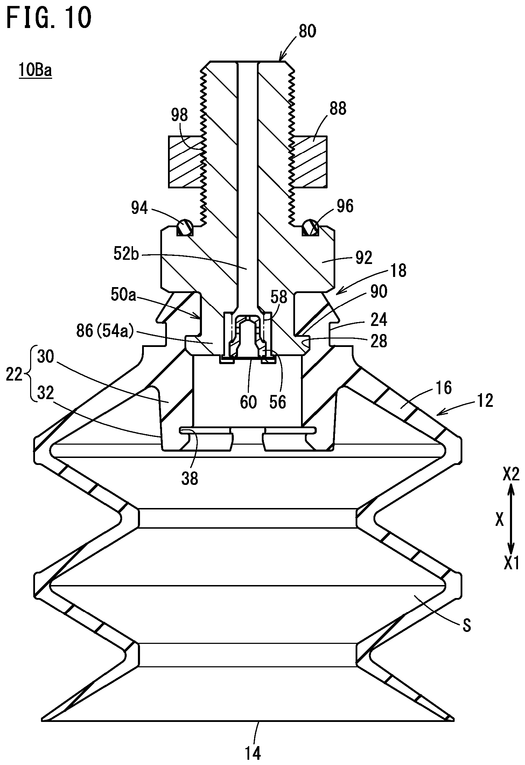

As shown in FIG. 10, a vacuum pad 10Ba according to a first exemplary modification differs in that, in comparison with the aforementioned vacuum pad 10B, the valve unit 50a is disposed integrally together with the adapter 80. In this case, the adapter main body 86 also functions as the valve housing 54a. The adapter main body 86 and the valve housing 54a include a suction flow path 52b in the interior thereof. In accordance with such a vacuum pad 10Ba, compared to a case in which the valve unit 50a and the adapter 80 are provided separately, the number of component parts of the vacuum pad 10Ba can be reduced. Further, the time required to assemble the vacuum pad 10Ba can be shortened.

### (Second Exemplary Modification)

As shown in FIG. 11, a vacuum pad 10Bb according to a second exemplary modification is equipped with the pad member 12, the adapter 80, and the filter 100. Moreover, it should be noted that the vacuum pad 10Bb is not equipped with the aforementioned valve unit 50a. A suction flow path 52c of the vacuum pad 10Bb includes an inner hole 31 of the inwardly protruding portion 30 and the inner hole 89 of the adapter main body 86. The filter 100 is capable of being attached to and detached from the groove portion 38 of the mounting member 18 of the pad member 12. The outer diameter of the filter 100 is greater than the inner diameter of the inwardly protruding portion 30. The filter 100 prevents a situation in which foreign matter enters into the suction flow path 52c from the internal space S of the pad main body 16. The filter 100 is formed in a mesh-like shape.

The filter 100 is inserted from the side of the internal space S of the pad main body 16 into the interior of the mounting member 18. According to the present exemplary modification, since a tool such as pliers or the like can be inserted from the gap 44 between the mutually adjacent locking pawls 32 and thereby clamp the outer edge of the filter 100, it is possible to easily take out the filter 100 from the mounting member 18. Such a vacuum pad 10Bb does not include the valve unit 50a, and therefore, the vacuum pad 10Bb can have a simple configuration.

Regarding the above-described disclosure, the following Supplementary Notes are further disclosed.

### (Supplementary Note 1)

The vacuum pad (10A, 10B, 10Ba, 10Bb) is configured to use the vacuum to clamp the workpiece (W), and includes the hollow pad main body (16) including the clamping surface (14) configured to contact the workpiece, the annular shaped mounting member (18) provided on the pad main body and configured to be installed on the support member (200, 300), and the valve unit (50, 50a) provided on the inner side of the mounting member and configured to adjust the flow rate of the air that flows through the suction flow path (52, 52a, 52b) through which the air from the internal space (S) of the pad main body is sucked in.

In accordance with such a configuration, since the flow rate of the air that flows through the suction flow path can be adjusted by the valve unit, in a state in which the internal space of the pad main body is not blocked by the workpiece, more air than necessary can be prevented from being sucked in. Accordingly, a satisfactory vacuum pad can be obtained.

### (Supplementary Note 2)

In the vacuum pad according to Supplementary Note 1, the valve unit may be formed in the manner so that, in a state in which the air of the internal space is sucked in from the suction flow path, the flow rate in the case that the internal space is not blocked by the workpiece becomes smaller than the flow rate in the case that the internal space is blocked by the workpiece.

In accordance with such a configuration, in the case that the internal space is not blocked by the workpiece, it is possible to suppress an increase in pressure on the upstream side (the negative pressure chamber) of the suction flow path. Further, in the case that the internal space is blocked by the workpiece, the internal space of the pad main body can be quickly reduced in pressure to the same pressure as the pressure of the negative pressure chamber.

### (Supplementary Note 3)

In the vacuum pad according to Supplementary Note 1 or 2, the valve unit may include the valve housing (54, 54a) including in the interior of the valve housing at least a portion of the suction path, and the valve element (56) that is disposed in the suction flow path.

In accordance with such a configuration, the configuration of the valve unit can be simplified.

### (Supplementary Note 4)

In the vacuum pad according to Supplementary Note 3, the mounting member may include the annular shaped protruding portion (20) that is projected out from the pad main body on the opposite side to the internal space, and on the outer circumferential surface of the protruding portion, the outer side installation groove (24) that is capable of being installed on the support member is formed.

In accordance with such a configuration, the vacuum pad can be installed to the support member (the first support member) of the direct mounting type.

### (Supplementary Note 5)

In the vacuum pad according to Supplementary Note 4, the protruding member may be elastically deformable, the valve unit may be capable of being installed in the inner side of the mounting member in a state in which the outer side installation groove is installed on the support member, and the valve housing may be positioned on the inner side of the protruding member in a state in which the valve unit is installed on the inner side of the mounting member, and may be configured to restrict elastic deformation toward the inner side of the protruding portion.

In accordance with such a configuration, it is possible to suppress a situation in which the vacuum pad unintentionally falls off from the first support member.

### (Supplementary Note 6)

In the vacuum pad according to any one of Supplementary Notes 1 to 5, the valve unit may be capable of being attached to and detached from the mounting member, and on the inner circumferential surface of the mounting member, the inner side installation groove (28) is formed, and the adapter (80) configured to install the mounting member on the support member is capable of being installed into the inner side installation groove.

In accordance with such a configuration, the vacuum pad can be installed to the support member (the second support member) of the direct mounting type.

### (Supplementary Note 7)

In the vacuum pad according to any one of Supplementary Notes 1 to 4, there may further be provided the adapter configured to install the mounting member on the support member, on an inner circumferential surface of the mounting member, the inner side installation groove is formed, and the adapter is capable of being installed in the inner side installation groove, and the adapter may include the valve unit.

In accordance with such a configuration, compared to a case in which the adapter and the valve unit are provided separately, the number of component parts of the vacuum pad can be reduced.

### (Supplementary Note 8)

In the vacuum pad according to any one of Supplementary Notes 1 to 7, the locking pawl (32) configured to support the valve unit may be disposed on the mounting member.

In accordance with such a configuration, the valve unit can be easily fixed to the mounting member.

### (Supplementary Note 9)

In the vacuum pad according to any one of Supplementary Notes 1 to 8, the pad main body may be formed in a bellows shape.

In accordance with such a configuration, the pad main body, together with being expanded and contracted in the axial direction, can be made to bend with respect to the axial direction of the pad main body. In accordance with this feature, for example, even in the case that an external force acts on the workpiece, it is possible to prevent the suction surface from coming off from the workpiece.

### (Supplementary Note 10)

In the vacuum pad according to any one of Supplementary Notes 1 to 9, there may further be provided the filter (60) configured to prevent foreign matter from entering into the suction flow path from the internal space.

It is thereby possible to prevent foreign matter from entering into the upstream side of the suction flow path.

### (Supplementary Note 11)

The pad member (12) is configured to use a vacuum to clamp the workpiece (W), and includes the hollow pad main body including the suction surface configured to contact the workpiece, and the annular shaped mounting member provided on the pad main body, wherein the mounting member includes the annular shaped protruding part configured to protrude outwardly from the pad main body, on the outer circumferential surface of the protruding portion, the outer side installation groove that is capable of being installed on the first support member (200), and on the inner circumferential surface of the mounting member, the inner side installation groove is formed, and the adapter configured to install the mounting member on the second support member (300) is capable of being installed into the inner side installation groove.

In accordance with such a configuration, the pad member can be installed on both the first support member of the direct mounting type and the second support member of the adapter mounting type. Therefore, the method of installing the pad member can be flexibly changed depending on the workpiece. Accordingly, a satisfactory pad member can be obtained.

The present invention is not necessarily limited to the above-described disclosure, and various configurations can be adopted therein without departing from the essence and gist of the present invention.

## Claims

1. A vacuum pad (10A, 10B, 10Ba, 10Bb) configured to use a vacuum to clamp a workpiece (W), the vacuum pad comprising:
a hollow pad main body (16) including a suction surface (14) configured to contact the workpiece;
an annular shaped mounting member (18) provided on the pad main body and configured to be installed on a support member (200, 300); and
a valve unit (50, 50a) provided on an inner side of the mounting member and configured to adjust a flow rate of air that flows through a suction flow path (52, 52a, 52b) through which air from an internal space (S) of the pad main body is sucked in.

2. The vacuum unit according to claim 1, wherein the valve unit is formed in a manner so that, in a state in which the air of the internal space is sucked in from the suction flow path, the flow rate in a case that the internal space is not blocked by the workpiece becomes smaller than the flow rate in a case that the internal space is blocked by the workpiece.

3. The vacuum unit according to claim 1, wherein the valve unit comprises:
a valve housing (54, 54a) including in an interior of the valve housing at least a portion of the suction path; and
a valve element (56) that is disposed in the suction flow path.

4. The vacuum pad according to claim 3, wherein the mounting member includes an annular shaped protruding portion (20) that is projected out from the pad main body on an opposite side to the internal space, and
on an outer circumferential surface of the protruding portion, an outer side installation groove (24) that is capable of being installed on the support member is formed.

5. The vacuum pad according to claim 4, wherein the protruding member is elastically deformable,
the valve unit is capable of being installed in an interior of the mounting member in a state in which the outer side installation groove is installed on the support member, and
the valve housing is positioned on an inner side of the protruding member in a state in which the valve unit is installed on an inner side of the mounting member, and is configured to restrict elastic deformation toward an inner side of the protruding portion.

6. The vacuum pad according to claim 1, wherein the valve unit is capable of being attached to and detached from the mounting member, and
on an inner circumferential surface of the mounting member, an inner side installation groove (28) is formed, and an adapter (80) configured to install the mounting member on the support member is capable of being installed into the inner side installation groove.

7. The vacuum pad according to claim 1, comprising an adapter configured to install the mounting member on the support member,
wherein on an inner circumferential surface of the mounting member, an inner side installation groove is formed, and the adapter is capable of being installed in the inner side installation groove, and
the adapter includes the valve unit.

8. The vacuum pad according to claim 1, wherein a locking pawl (32) configured to support the valve unit is disposed on the mounting member.

9. The vacuum pad according to claim 1, wherein the pad main body is formed in a bellows shape.

10. The vacuum pad according to any one of claims 1 to 9, further comprising a filter (60) configured to prevent foreign matter from entering into the suction flow path from the internal space.

11. A pad member (12) configured to use a vacuum to clamp a workpiece, the pad member comprising:
a hollow pad main body including a suction surface configured to contact the workpiece; and
an annular shaped mounting member provided on the pad main body,
wherein the mounting member includes an annular shaped protruding part configured to protrude outwardly from the pad main body,
on an outer circumferential surface of the protruding portion, an outer side installation groove that is capable of being installed on a first support member (200), and
on an inner circumferential surface of the mounting member, an inner side installation groove is formed, and an adapter configured to install the mounting member on a second support member (300) is capable of being installed into the inner side installation groove.
